(19) Europäisches Patentamt / European Patent Office / Office européen des brevets

(11) **EP 4 283 324 B1**

(12) **FASCICULE DE BREVET EUROPEEN**

(45) Date de publication et mention de la délivrance du brevet:
**06.05.2026 Bulletin 2026/19**

(21) Numéro de dépôt: **23174994.6**

(22) Date de dépôt: **24.05.2023**

(51) Classification Internationale des Brevets (IPC):
**G01S 5/02** *(2010.01)* **G01S 5/14** *(2006.01)*
**G01S 19/05** *(2010.01)* **G01S 19/25** *(2010.01)*
**G01S 19/39** *(2010.01)*

(52) Classification Coopérative des Brevets (CPC):
**G01S 5/14; G01S 5/0236; G01S 19/05;**
**G01S 19/258; G01S 19/39**

(54) **PROCEDE ET SYSTEME DE LOCALISATION D'UN NOEUD MOBILE PAR MESURES RADIO UTILISANT UNE CARTE DE VISIBILITE**

VERFAHREN UND SYSTEM ZUR LOKALISIERUNG EINES MOBILEN KNOTENS DURCH FUNKMESSUNGEN UNTER VERWENDUNG EINER SICHTKARTE

METHOD AND SYSTEM FOR LOCATING A MOBILE NODE BY RADIO MEASUREMENTS USING A VISIBILITY MAP

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **25.05.2022 FR 2205042**

(43) Date de publication de la demande:
**29.11.2023 Bulletin 2023/48**

(73) Titulaire: **Commissariat à l'Energie Atomique et aux Energies Alternatives**
**75015 Paris (FR)**

(72) Inventeur: **VILLIEN, Christophe**
**38054 GRENOBLE Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
WO-A1-2009/035952    WO-A1-2022/051615
US-A1- 2022 050 211

- HSU LI-TA ET AL: "3D building model-based pedestrian positioning method using GPS/GLONASS/QZSS and its reliability calculation", GPS SOLUTIONS, SPRINGER BERLIN HEIDELBERG, BERLIN/HEIDELBERG, vol. 20, no. 3, 28 March 2015 (2015-03-28), pages 413 - 428, XP035981183, ISSN: 1080-5370, [retrieved on 20150328], DOI: 10.1007/S10291-015-0451-7
- HAO JIANG ET AL: "NLOS Mitigation Method for TDOA Measurement", INTELLIGENT INFORMATION HIDING AND MULTIMEDIA SIGNAL PROCESSING (IIH-MSP), 2010 SIXTH INTERNATIONAL CONFERENCE ON, IEEE, PISCATAWAY, NJ, USA, 15 October 2010 (2010-10-15), pages 196 - 199, XP031803536, ISBN: 978-1-4244-8378-5
- DE SOUSA MARCELO N ET AL: "Mobile Station Localization Emitter in Urban NLoS using Multipath Ray Tracing Fingerprints and Machine Learning", 2018 8TH INTERNATIONAL CONFERENCE ON LOCALIZATION AND GNSS (ICL-GNSS), IEEE, 26 June 2018 (2018-06-26), pages 1 - 6, XP033390599, DOI: 10.1109/ICL-GNSS.2018.8440898

## Description

### Domaine technique

L'invention concerne un procédé et un système de localisation d'un nœud mobile dans une zone donnée, utilisant des positions connues de nœuds de référence.

Le domaine technique de l'invention est celui de la localisation à partir de signaux radios. Il concerne plus précisément les méthodes utilisant le temps de vol de l'onde électromagnétique.

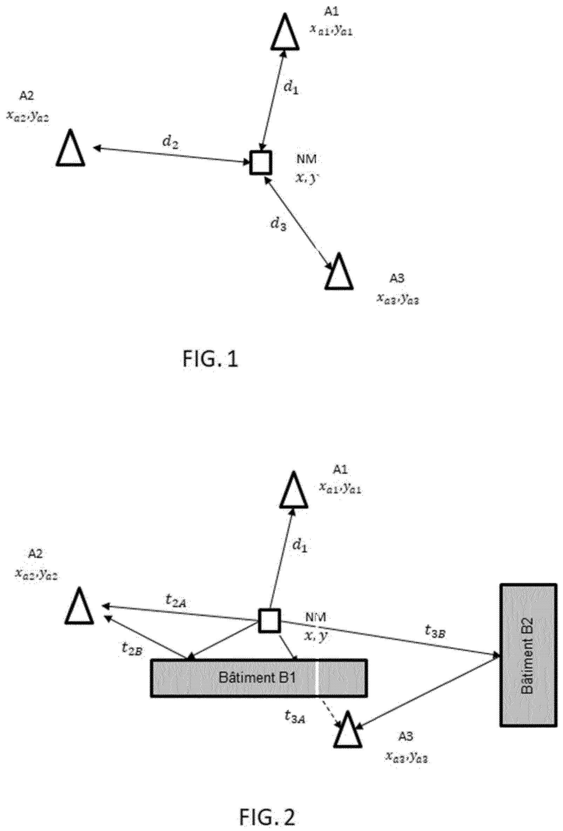

Comme illustré par la figure 1, les méthodes de localisation existantes consistent à mesurer le temps de vol du signal entre des nœuds de référence (A1, A2, A3), dont la position est généralement connue, et un nœud mobile TM, dont on cherche à déterminer la position.

Par exemple dans un réseau LPWAN (Low Power Wide Area Network, ou réseau faible consommation longue portée en français), le nœud de référence correspond à une ancre, c'est-à-dire un dispositif dont la position est connue et fixe, et le nœud mobile correspond à un « tag » (ou étiquette). Le tag est classiquement fixé à un objet de façon à transmettre des données de télémesure. Dans un réseau cellulaire, le nœud de référence correspond à une station de base, et le nœud mobile peut être un téléphone cellulaire. Dans un système de radionavigation par satellite, le nœud de référence correspond à un satellite (sa position est connue), et le nœud mobile peut être un récepteur de radionavigation.

Connaissant la vitesse de propagation des ondes, qui est égale à celle de la lumière, il est possible de déterminer la distance parcourue par celle-ci et donc, la distance séparant les nœuds fixes du nœud mobile. Il est alors fait référence à une mesure de « ranging », ce qui correspond à la mesure de temps de vol entre deux dispositifs, à la mesure de distance correspondante, ou encore à une pseudo-distance.

La localisation d'un nœud mobile est donc un problème classique de trilatération tel qu'illustré sur la figure 1, dont les inconnues (dans cet exemple en deux dimensions : x,y) répondent aux équations suivantes :

[Math1] :

$$\begin{cases} d_1 = \sqrt{(x - x_{a1})^2 + (y - y_{a1})^2} \\ d_2 = \sqrt{(x - x_{a2})^2 + (y - y_{a2})^2} \\ d_3 = \sqrt{(x - x_{a3})^2 + (y - y_{a3})^2} \end{cases}$$

La mesure précise du temps de vol requiert cependant que les horloges des nœuds fixes et du nœud mobile soient parfaitement synchronisées (avec une précision typiquement comprise entre 1 ns et 100 ns), une erreur de synchronisation d'une nanoseconde conduisant à une erreur de mesure de distance de 30 cm environ.

Cependant, cette synchronisation précise n'est généralement pas possible, et conduit à une description des mesures $m_i$ comprenant une inconnue supplémentaire $\Delta_i$ traduisant ce défaut de synchronisation. De plus, ces mesures peuvent être entachées d'autres erreurs $\varepsilon_i$ causées par exemple par le bruit de mesure et par les réflexions de l'onde. Dans le cas général, le système d'équations [Math1] devient :

[Math2]

$$\begin{cases} m_1 = d_1 + \Delta_1 + \varepsilon_1 \\ m_2 = d_2 + \Delta_2 + \varepsilon_2 \\ m_3 = d_3 + \Delta_3 + \varepsilon_3 \end{cases}$$

Il existe différentes techniques permettant de contourner le problème de synchronisation et de lever les inconnues $\Delta_i$ traduisant ce défaut de synchronisation.

Selon l'environnement dans lequel l'onde se propage, celle-ci peut être réfléchie (on parle de multi-trajet ou multipath) et/ou obstruée. On parle de Line Of Sight (LOS) en cas de propagation de l'onde sur un trajet direct, sans réflexion, entre l'émetteur et le récepteur, et de Non-Line Of Sight (NLOS) dans le cas contraire.

Ceci se produit par exemple en environnement urbain où les bâtiments peuvent jouer à la fois le rôle d'obstacles et/ou de réflecteurs pour l'onde électromagnétique.

La figure 2 illustre ces différentes situations.

Le nœud de référence A1 est en situation de LOS sans multi-trajet par rapport au nœud mobile TM car il ne reçoit que le trajet direct, sans trajet réfléchi. Le nœud de référence A2 est en situation de LOS avec multi-trajet par rapport au nœud mobile TM car il reçoit le trajet direct $t_{2A}$ ainsi qu'un trajet réfléchi $t_{2B}$. Le nœud de référence A3 est en situation de NLOS avec multi-trajet par rapport au nœud mobile TM car il ne reçoit pas le trajet direct $t_{3A}$ qui est obstrué par le bâtiment B1 mais il reçoit un trajet réfléchi $t_{3B}$ par le bâtiment B2.

Une situation NLOS sans multi-trajet conduit à la non réception du signal puisque celui-ci ne dispose d'aucun chemin pour parvenir à sa destination.

Dans la représentation de la figure 2, la mesure effectuée par le nœud de référence A1 peut être considérée comme la plus fiable car elle ne subit aucune perturbation dans sa propagation. L'erreur associée ($\varepsilon_1$) est dans ce cas principalement déterminée par le bruit de la mesure, ce qui constitue une erreur minimale.

Par exemple, pour une forme d'onde de type LoRa, l'erreur causée par le bruit seul est typiquement de l'ordre de la centaine de mètres (entre 10 m et 300 m).

La mesure effectuée par le terminal fixe A2 peut être perturbée par la présence du multi-trajet. L'erreur engendrée dépend de la capacité du nœud de référence A2 à distinguer le trajet direct du trajet réfléchi (qui arrivera en retard par rapport au trajet direct), ainsi que par la puissance relative de celui-ci par rapport au trajet direct. Il s'agit donc d'une situation intermédiaire.

Par exemple, pour une forme d'onde de type LoRa, l'erreur causée par le bruit et le multi-trajet est très variable selon les caractéristiques des trajets réfléchis. Les erreurs peuvent varier entre quelques dizaines de mètres (identique au bruit seul) et plusieurs kilomètres.

La mesure effectuée par le nœud de référence A3 est quant à elle fortement biaisée. En effet, le seul signal parvenant jusqu'à ce nœud de référence a parcouru une distance correspondant au trajet $t_{3B}$, significativement plus grande que le trajet direct $t_{3A}$ ; le temps de vol est donc le reflet de cette distance et non pas de celle du trajet direct. Cette mesure est généralement qualifiée d'artefact (ou d'outlier) car elle présente une erreur qui peut être supérieure de plusieurs ordres de grandeur à la seule erreur due au bruit.

Par exemple, pour une radio de type LoRa, l'erreur dans une situation NLOS est typiquement de plusieurs centaines de mètres à plusieurs kilomètres.

La difficulté d'une telle situation est qu'il très difficile, voire impossible, de déterminer quelle est la fiabilité de chacune des mesures.

D'une manière générale on peut différencier les algorithmes séquentiels (qui exploitent les solutions précédentes), des approches instantanées (« single epoch », « snapshot ») qui s'appuient uniquement sur les mesures reçues à l'instant t.

Dans une approche séquentielle, le système peut prédire la position possible à l'instant t d'après les solutions trouvées aux instants précédents t - 1, t - 2, avec une marge d'erreur acceptable (cette notion de marge d'erreur acceptable s'apprécie au regard de la précision de la mesure donnée par le bruit par exemple).

De la position prédite, on peut en déduire une « mesure prédite » ainsi que sa marge d'erreur associée qui pourra être comparée à la mesure réalisée. Dans le cas où l'incohérence entre la prédiction et la mesure excède la marge d'erreur calculée (éventuellement augmentée d'une tolérance arbitraire), la mesure fautive peut être exclue du calcul de la solution, comme proposé dans l'article « NLOS Mitigation Method for TDOA Measurement », H. Jiang, J. Xu et Z. Li, 2010 Sixth International Conference on Intelligent Information Hiding and Multimedia Signal Processing, 2010, pp. 196-199.

L'approche séquentielle n'est praticable qu'à condition que la fréquence de rafraichissement des mesures soit suffisamment élevée par rapport à la vitesse de déplacement de l'objet à localiser, pour tirer une information exploitable d'une estimation précédente, l'information se diluant dans le temps.

Or, l'augmentation de la fréquence de rafraichissement des mesures entraîne une augmentation de la consommation électrique du terminal mobile, ce qui va à l'encontre des conditions d'utilisation des réseaux basse consommation de type réseau LPWAN.

Les approches non-séquentielles (« single epoch ») les plus répandues s'appuient généralement sur une redondance des mesures, c'est-à-dire que le nombre de nœuds de référence (Na) est significativement supérieur au nombre d'inconnues (n+1) : Na > n+1. Dans ce cas, il est possible de construire des sous-ensembles de mesures dont chacun permet de calculer une solution.

Les solutions obtenues peuvent être comparées entre-elles afin de déterminer quels sous-ensembles conduisent à des solutions cohérentes, et quels sous-ensembles conduisent à des solutions marginales. De là, il est généralement possible de déduire, en analysant la composition des sous-ensembles non-cohérents, la ou les mesures qui peuvent être fautives.

Ces techniques fonctionnent bien lorsque la redondance est très forte (Na >> n+1), mais elles conduisent alors à de très nombreuses quantités de sous-ensembles à analyser, ce qui exige des capacités calculatoires élevées.

De manière alternative, l'algorithme peut s'appuyer sur la connaissance de l'environnement au travers d'une carte 3D, afin de prédire, pour une position donnée, quelles sont les mesures qui sont les plus probablement biaisées.

De telles cartes sont aujourd'hui facilement accessibles et disponibles pour un grand nombre de villes (exemple la base de données OSM Buildings). Chaque bâtiment est identifié par la position en deux dimensions de son empreinte au sol, et par sa hauteur.

Certaines approches exploitent les cartes pour simuler la propagation des ondes entre chaque position possible du nœud mobile et les différents nœuds de référence en utilisant des techniques dites de « lancer de rayon » (raytracing) afin de déterminer une cartographie des biais qui affecteront chacune des mesures pour chacune des positions possibles.

Cette cartographie peut ensuite être prise en compte par des algorithmes pour corriger les mesures et améliorer l'estimation des positions ; on parle de « NLOS-mitigation » (voir par exemple l'article « Mobile Station Localization Emitter in Urban NLoS using Multipath Ray Tracing Fingerprints and Machine Learning », M. N. De Sousa et R. S. Thomä, 2018 8th International Conference on Localization and GNSS (ICL-GNSS), 2018, pp. 1-6).

Cependant, ces approches sont d'une part extrêmement coûteuses en temps de calcul car la cartographie des biais nécessite de simuler une propagation « complète » (en envisageant les réflexions possibles du signal), pour chaque position de la carte et vis-à-vis de chaque nœud de référence, et d'autre part très peu fiables car ces simulations, si complexes soient-elles, peinent à prédire la propagation réelle qui est bien plus complexe encore à l'échelle d'une ville.

D'autres approches utilisent la carte pour prédire quelles seront les mesures en situation de NLOS.

En particulier, la demande de brevet WO 2022/051615 A1 prévoit, dans un contexte de véhicule communicant, d'utiliser une carte pour détecter des trajets en situations NLOS. La carte comprend la position de tous les réflecteurs dans l'environnement du terminal utilisateur. La carte permet de déterminer au moins un signal de positionnement de référence PRS, qui se propage sur au moins un trajet de NLOS.

La position du terminal utilisateur est déterminée à partir du signal de positionnement de référence PRS. La demande de brevet WO 2022/051615 A1 ne décrit pas la façon dont est exploitée, par l'algorithme de géolocalisation, la connaissance de la condition LOS/NLOS de chacun des points de la carte.

La demande de brevet WO 2009/035952 A1 divulgue un procédé pour déterminer la position d'un terminal mobile, en utilisant un des nœuds fixes en tant que nœud de référence (approche de type TDOA, qui requiert donc une mesure particulière servant de pivot).

Dans ce document, une première position du nœud mobile est déterminée, sans prendre en compte la carte. A partir de cette première position, de la carte et de la position des terminaux fixes, les trajets en LOS/NLOS sont évalués. Le nœud de référence est sélectionné, parmi les nœuds en LOS. La position du nœud mobile est calculée en prenant en compte les conditions LOS/NLOS des mesures.

Cependant, avec une telle approche, l'évaluation des conditions LOS/NLOS d'après la carte n'est pas fiable car la position du nœud mobile considérée est déterminée par une première estimation n'utilisant pas la connaissance des conditions LOS/NLOS, elle peut donc s'avérer fortement erronée. Par conséquent, l'évaluation des conditions de propagation ne se fait pas sur la base de postions correctes.

Par exemple, si la position considérée est fausse, ne serait-ce que d'une dizaine de mètres, un obstacle peut être ou non sur le trajet de l'onde, rendant l'évaluation erronée.

Le document « 3D building model-based pedestrian positioning method using GPS/GLONASS/QZSS and is reliability calculation » (Hsu et al.) décrit un procédé de positionnement utilisant un système de géolocalisation par satellites, dans lequel les effets liés aux multi-trajets dans un environnement urbain sont atténués. Pour cela, un filtre à particules est utilisé afin de distribuer les positions possibles.

Le document US 2022/050211 A1 (Bennington et al.) décrit procédé de fourniture de prévisions de la réduction de la précision en navigation GNSS pour des calculs d"itinéraire de véhicules.

Il existe ainsi un besoin pour fournir un procédé de localisation d'un nœud mobile dans une zone donnée, utilisant des positions connues de nœuds de référence, qui ait un niveau de précision élevé, sans toutefois avoir un impact sur la consommation énergétique du nœud mobile.

## Résumé de l'invention

L'invention vise à remédier aux inconvénients précités, en proposant un procédé flexible et simple d'utilisation.

L'invention a pour objet un procédé de localisation d'un nœud mobile dans une zone donnée, tel que défini dans les revendications 1 à 11.

L'invention se rapporte également à un système de localisation d'un nœud mobile dans une zone donnée, tel que défini dans les revendications 12 à 14.

## Description des figures

D'autres caractéristiques, détails et avantages de l'invention ressortiront à la lecture de la description faite en référence aux dessins annexés donnés à titre d'exemple.

La figure 1, déjà décrite, illustre le principe de localisation par trilatération.

La figure 2, déjà décrite, illustre des situations de multi-trajet et d'obstructions.

La figure 3 est un ordinogramme des différentes étapes du procédé selon l'invention.

La figure 4 illustre un exemple de zone géographique pour laquelle la carte de visibilité est établie.

La figure 5 illustre un exemple de carte de visibilité.

La figure 6 illustre un exemple de carte des scores de cohérence.

**Description détaillée**

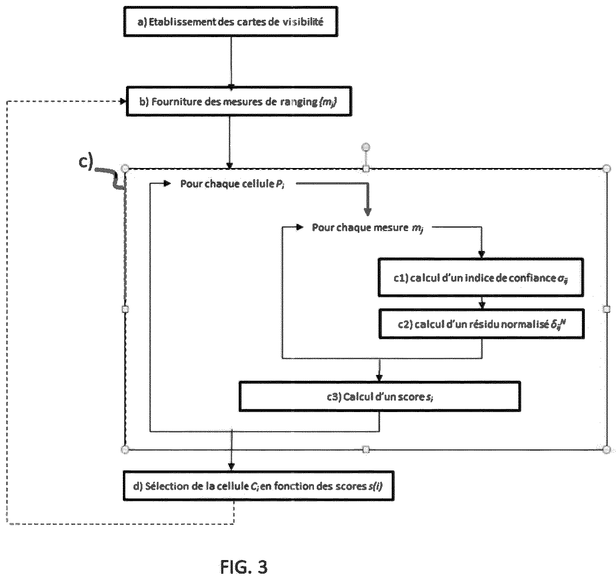

Un ordinogramme des différentes étapes du procédé est illustré par la figure 3.
La première étape du procédé consiste à établir une pluralité de cartes de visibilité (étape a) du procédé). La carte de visibilité correspond à un espace 2D ou 3D prédéfini, qui est discrétisé de façon à obtenir un maillage régulier ou non de cellules, qui correspondent à autant de positions possibles du nœud mobile dont on cherche à déterminer la position.
Le procédé selon l'invention fait appel à autant de cartes de visibilité $C_j$ qu'il y a de nœuds de référence $N_j$ utilisables pour les mesures de ranging. La position de chaque nœud de référence $N_j$ est connue dans la carte de visibilité $C_j$.
L'espace délimité par la carte de visibilité est identique pour l'ensemble des cartes de visibilité. Il peut s'agir, par exemple, d'un carré de plusieurs kilomètres de côté. La position d'une cellule peut être définie par 2 coordonnées (x,y en 2D) ou 3 coordonnées (x,y,z) en 3D. Ces positions peuvent être choisies selon une grille par exemple, où elles sont réparties uniformément et séparées les unes des autres d'un pas prédéfini, par exemple dix mètres dans les deux directions x et y (voire dans les trois directions).
Pour chaque cellule $P_i$ de la carte de visibilité $C_j$, un indicateur de visibilité $I_{ij}$ correspondant à une propagation radio en visibilité directe entre la cellule $P_i$ et le nœud de référence $N_j$ est calculé.

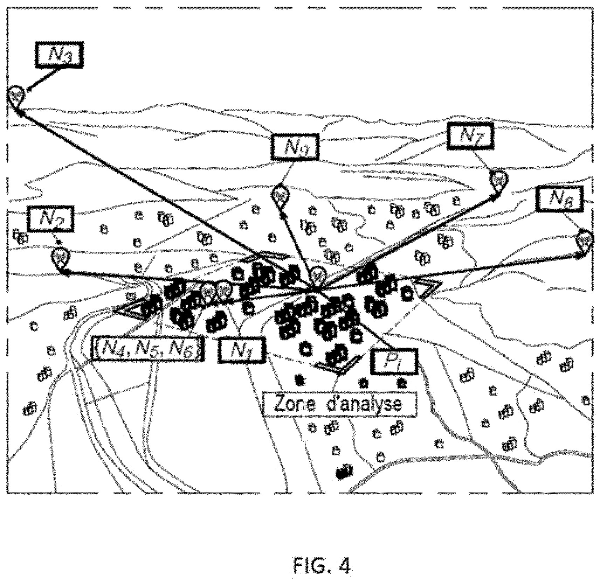

La figure 4 illustre un exemple de zone géographique pour laquelle la carte de visibilité est établie, en utilisant plusieurs nœuds de référence $N_1$ ... $N_9$.
L'indicateur de visibilité $I_{ij}$ fournit une indication de type « Line Of Sight » (LOS) ou « Non Line Of Sight » (NLOS) entre la cellule $P_i$ et le nœud de référence $N_j$.
L'indicateur de visibilité $I_{ij}$ peut être calculé par simulation, par exemple à l'aide du logiciel Matlab, en ayant chargé certaines données de cartographie du terrain. Les données peuvent être issues, par exemple, du projet collaboratif « OpenStreetMap », complétées éventuellement par des données indiquant la hauteur de chaque bâtiment. Ces données peuvent être obtenues par la librairie « OSM Building ».
Le logiciel Matlab comprend la fonction « RayTracing », qui permet d'établir un modèle de propagation entre deux cellules données, en spécifiant qu'il ne doit y avoir aucune réflexion dans le trajet de propagation, afin d'obtenir l'information de type LOS/NLOS. Il n'est donc pas nécessaire de simuler une propagation « complète », en envisageant toutes les réflexions possibles du signal.
Tout autre logiciel de simulation permettant d'effectuer d'obtenir une information de type LOS/NLOS entre deux cellules d'une carte pourrait également être utilisé.
La carte de visibilité peut également être déterminée par des relevés terrain effectués dans un autre contexte, plutôt que par des simulations.
Selon un mode de réalisation, l'indicateur de visibilité $I_{ij}$ a une valeur binaire indiquant une situation de propagation radio en visibilité directe ou une situation d'absence de propagation radio en visibilité directe. Par exemple, $I_{ij} = 1$ en situation de LOS entre la cellule $P_i$ et le nœud de référence $N_j$, et $I_{ij} = 0$ dans le cas contraire. Le fait d'utiliser des valeurs binaires simplifie fortement les calculs ultérieurs de localisation du nœud mobile.
En variante, l'indicateur de visibilité peut prendre une valeur continue comprise entre 0 et 1, permettant de nuancer le niveau d'obstruction, et d'améliorer la précision du procédé de localisation.
Ainsi, l'indicateur de visibilité $I_{ij}$ entre la cellule $P_i$ et le nœud de référence $N_j$ peut être défini par :

$$l_{ij} = \begin{cases} 1 - \dfrac{b_{int}}{b_{max}} & \text{si } b_{int} < b_{max} \\ 0 & \text{sinon} \end{cases}$$

En considérant le segment NLOS qui relie la cellule $P_i$ et le nœud de référence $N_j$, la longueur $b_{int}$ correspond à la longueur du segment qui empêche la ligne de vue directe entre la cellule $P_i$ et le nœud de référence $N_j$. Par exemple, l'obstruction peut être provoquée par la traversée d'un bâtiment, ou du sol dans le cas d'une intersection avec le terrain en cas de relief. Une longueur maximale $b_{max}$ est prédéfinie, par exemple égale à dix mètres. Si la portion d'obstruction du segment est supérieure à la longueur maximale $b_{max}$, il est considéré que $l_{ij} = 0$. Cela permet de ne prendre en compte que les petits obstacles, par exemple les arêtes ou les bords des bâtiments, et de nuancer ainsi les informations de type LOS/NLOS.

Par exemple, si le segment ne coupe aucun bâtiment ($b_{int} = 0$), l'indicateur de visibilité $I_{ij}$ est égal à 1 comme précédemment ; s'il coupe un bâtiment sur cinq mètres ($b_{int} = 5$), l'indicateur est égal à 0,5, et si la longueur est supérieure ou égale à dix mètres ($b_{max}$) alors l'indicateur est égal à 0.

Les indicateurs de visibilité $I_{ij}$ sont calculés pour toutes les cellules $P_i$ de la carte de visibilité $C_j$, et il y a autant de cartes de visibilité $C_j$ qu'il y a de nœuds de référence $N_j$ dans la zone considérée. Il est possible de ne considérer qu'une partie des nœuds de référence $N_j$ de la zone, notamment pour alléger le coût calculatoire du procédé.

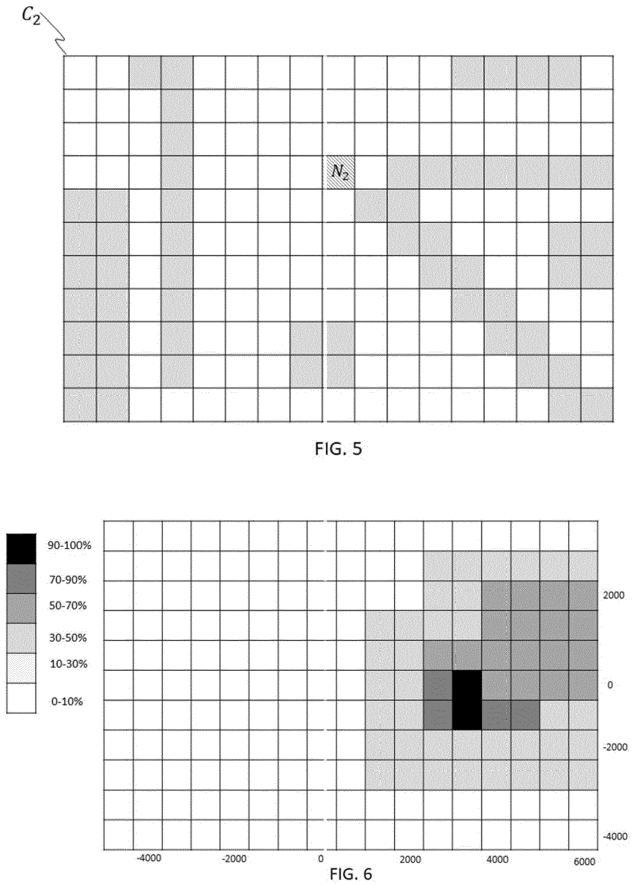

La figure 5 illustre une vue en détail de la carte de visibilité $C_2$ associée au nœud de référence $N_2$. Les cellules grisées sont des cellules pour lesquels l'indicateur de visibilité $I_{ij}$ est non nul (situation de LOS). Les cellules en blanc sont des cellules pour lesquels l'indicateur de visibilité $I_{ij}$ est nul (situation de NLOS).

Les cartes de visibilité peuvent être calculées « hors ligne », c'est-à-dire en amont de l'étape de localisation du nœud mobile. Elles peuvent être calculées une seule fois et une fois pour toutes ; cependant, il préférable qu'elles soient calculées périodiquement, et/ou lorsqu'il y a des changements de nœuds de référence (activation d'un nouveau nœud de référence ou désactivation d'un nœud de référence), ou encore lorsqu'il y a des modifications dans la zone donnée, susceptibles d'avoir une influence sur les calculs des indicateurs de visibilité (par exemple, construction d'un bâtiment, ou encore déplacement, ajout ou retrait d'un nœud de référence).

L'établissement des cartes de visibilité sur une zone étendue peut mener à des simulations particulièrement longues et intensives.

Afin de raccourcir le délai d'établissement des cartes de visibilité, il est proposé de subdiviser chaque carte de visibilité en une pluralité de zones, l'étape a) est mise en œuvre pour chacune des zones, de façon indépendante l'une de l'autre. Seuls les bâtiments et autre points de reliefs appartenant à la zone considérée sont chargés pour le traitement.

L'établissement partiel des cartes de visibilité peut, selon des modes de réalisation, être effectué de façon séquentielle (chaque zone après l'autre), ou en parallèle (toutes les zones en même temps).

Un recouvrement entre deux zones adjacentes peut être mis en œuvre, afin d'améliorer la fiabilité du calcul de l'indicateur de visibilité. En effet, lorsque la cellule $P_i$ est en bordure de zone, certaines situations de NLOS peuvent ne pas être détectées puisque les bâtiments en dehors de la zone ne sont pas représentés. L'ajout d'un recouvrement (ou d'une marge) permet de garantir que l'environnement immédiat de chaque point de la carte est correctement modélisé dans toutes les directions de l'espace.

De façon avantageuse, un recouvrement de l'ordre de 25% peut être mis en œuvre : pour une zone définie par un carré de 2 km x 2 km, un recouvrement de 500 m peut être utilisé, ce qui permet de représenter tous les bâtiments dans un voisinage de 500 m au minimum.

Le procédé selon l'invention comprend ensuite plusieurs étapes qui sont effectuées « en ligne », car implémentées à chaque fois qu'il y a lieu de localiser un nœud mobile. La première de ces étapes (après l'établissement des cartes de visibilité) consiste à fournir un ensemble de mesures de ranging à partir de signaux émis ou reçus par une pluralité de nœuds de référence.

L'invention n'est pas limitée à une mesure de ranging en particulier. On distingue typiquement plusieurs techniques permettant de localiser un terminal mobile par des mesures de ranging.

La première technique, appelée « technique d'aller-retour » (ou TWR pour « Two Way Ranging »), suppose que les nœuds de référence et le nœud mobile puissent être à la fois émetteur et récepteur. Dans ce cas, une émission dans un sens (par exemple nœud de référence vers nœud mobile) est suivie d'une émission dans l'autre sens (nœud mobile vers nœud de référence). Il est peut être démontré qu'en combinant les différents temps de départ et d'arrivée mesurés, l'erreur de synchronisation peut être levée pour chaque mesure, ce qui permet de déterminer une distance.

Une deuxième technique basée sur la différence de temps d'arrivée (Time Difference Of Arrival, TDOA), permet de localiser un nœud mobile en effectuant des transmissions unidirectionnelles, c'est-à-dire que, par exemple, seul le nœud mobile émet et les nœuds de référence sont en réception uniquement, ou seuls les nœuds de référence émettent et le nœud mobile est en réception uniquement. Elle suppose également que les nœuds de référence soient synchronisés précisément entre eux, c'est-à-dire que les inconnues $\Delta_1$, $\Delta_2$ et $\Delta_3$ soient identiques et se réduisent à une seule valeur $\Delta$ traduisant l'erreur de synchronisation entre l'ensemble des nœuds de référence et le nœud mobile. Dans ce cas, le calcul de « mesures secondaires » construites comme la différence des mesures élimine l'inconnue $\Delta$ et conduit au système d'équation suivant :

[Math3]

$$\begin{cases} m_1 - m_3 = \sqrt{(x - x_{a1})^2 + (y - y_{a1})^2} - \sqrt{(x - x_{a3})^2 + (y - y_{a3})^2} + \varepsilon_1 - \varepsilon_3 \\ m_2 - m_3 = \sqrt{(x - x_{a2})^2 + (y - y_{a2})^2} - \sqrt{(x - x_{a3})^2 + (y - y_{a3})^2} + \varepsilon_2 - \varepsilon_3 \end{cases}$$

Il peut être noté que, pour cette approche, une mesure (ici $m_3$) joue un rôle particulier et sert en quelque sorte de pivot.

Ceci implique également qu'il faut un nombre de mesure supérieur ou égal à n+1, n étant le nombre d'inconnues de la position (deux en 2D, trois en 3D).

Un inconvénient de cette technique est qu'une mesure joue un rôle particulier, puisqu'elle apparait dans plusieurs des mesures secondaires. En effet, si cette mesure est entachée d'une forte erreur, celle-ci sera répercutée sur l'ensemble des mesures secondaires. De plus, lorsque le nombre de mesures est supérieur au nombre minimal nécessaire, il est possible, selon des choix arbitraires de construire un grand nombre sous-ensembles en choisissant différentes « mesures pivot ».

Une troisième technique, dite TOA (ou Time Of Arrival), est très similaire à la technique TDOA, sauf que, plutôt de que de combiner les mesures afin d'éliminer « mathématiquement » l'inconnue de synchronisation $\Delta_i$, celle-ci est ajoutée à la liste des inconnues à déterminer. Il y a, avec cette technique, la nécessité de devoir disposer d'au moins n+1 mesures, sans toutefois l'inconvénient de devoir déterminer arbitrairement les sous-groupes de mesures secondaires ni de définir les mesures pivot. Cette approche est celle utilisée par tous les récepteurs de radionavigation par satellite (le récepteur joue le rôle du nœud mobile, et les satellites celui des nœuds de référence).

L'invention est présentée dans le cadre de la technique TOA, avec un nœud mobile émetteur et des nœuds de référence récepteurs. L'homme métier saura adapter l'invention à d'autres techniques de localisation, et à d'autres configurations d'émission/réception entre le nœud mobile et le nœud de référence.

Dans la première étape, il est donc considéré, selon un mode de réalisation, qu'un ensemble de M mesures correspondant aux temps d'arrivés (TOA) d'une même transmission mesurée par M nœuds de référence sont reçues. Ces temps d'arrivée peuvent avoir typiquement une résolution de quelques nanosecondes et sont délivrés sous la forme de la partie décimale de la seconde courante. En effet, les temps d'arrivée mesurés par les différents nœuds de référence sont suffisamment proches (écarts << 1 ms) pour qu'ils appartiennent à la même seconde.

Ces mesures peuvent être transformées en pseudo-distances par multiplication du temps par la vitesse de la lumière afin de convertir les temps en mètres, et se ramener aux équations suivantes :

$$\begin{cases} m_1 = c.TOA1 = d_1 + \Delta + \varepsilon_1 \\ m_2 = c.TOA2 = d_2 + \Delta + \varepsilon_2 \\ m_3 = c.TOA3 = d_3 + \Delta + \varepsilon_3 \end{cases}$$

Il peut être noté que les mesures peuvent être construites selon les différentes techniques décrites précédemment, et peuvent être directement sous la forme de distance si la mesure utilise la technique d'aller-retour TWR.

Le nombre de mesures reçues peut être inférieur au nombre de nœuds de référence déployés, en particulier si certains nœuds de référence ne captent pas le signal émis par le nœud mobile, ou s'ils le captent mais avec une puissance insuffisante.

Une fois que les mesures de ranging ont été obtenues (ou au moins une partie des mesures de ranging), un score va être attribué à chaque cellule, le score indiquant la vraisemblance que le nœud mobile se trouve dans la cellule.

A cet effet, selon une première sous-étape c1) (cf. figure 3), un indice de confiance $\sigma_{ij}$ est calculé à partir de l'indicateur de visibilité $l_{ij}$ entre la cellule $P_i$ et le nœud de référence $N_j$ identifié par la mesure de ranging $m_j$. Dans la trame de données de la mesure de de ranging $m_j$, ou dans l'ensemble de trames correspondantes, l'identité du nœud de référence, dont la position est connue, peut être facilement identifiée.

En considérant une cellule $P_i$ sur la carte de visibilité $C_j$ associée au nœud de référence $N_j$, l'indice de confiance $\sigma_{ij}$ associée à une mesure $m_j$ supposée à la cellule $P_i$ utilise l'indicateur de visibilité $l_{ij}$. Selon le mode de réalisation dans lequel l'indicateur de visibilité $l_{ij}$ a une valeur binaire, l'indice de confiance $\sigma_{ij}$ peut être défini de la façon suivante :

$$\sigma_{ij} = \begin{cases} \sigma_A & \text{si } l_{ij}=1 \\ \sigma_B & \text{si } l_{ij}=0 \end{cases}$$

Plus généralement, selon le mode de réalisation où l'indicateur de visibilité $l_{ij}$ n'est pas nécessairement une valeur binaire, et peut prendre une valeur continue comprise entre 0 et 1, l'indice de confiance $\sigma_{ij}$ est calculé selon la formule :

$$\sigma_{ij} = \sigma_0 + (1 - l_{ij})\, \sigma_1$$

$\sigma_0$ et $\sigma_1$ correspondent à des valeurs prédéterminées, identiques pour toutes les cellules et pour tous les nœuds de référence.

Par exemple, il est possible d'utiliser un rapport de un à vingt entre $\sigma_0$ et $\sigma_1$, en particulier les valeurs suivantes : $\sigma_0$ = 100 m et $\sigma_1$ = 2000 $m$.

L'indice de confiance peut également dépendre de l'altitude du nœud de référence. Par exemple, lorsque l'altitude d'un nœud de référence est supérieure à une certaine altitude prédéfinie, l'indice de confiance est égal à une valeur constante indépendamment de l'indicateur de visibilité. Le nœud de référence est en effet visible quelle que soit la position de la cellule et son environnement. Cela permet de coller plus fidèlement à la réalité (le NLOS calculé de la carte n'est pas effectif et la propagation se rapproche d'avantage, en pratique, de conditions LOS) et donc d'améliorer la précision du procédé.

Selon un autre mode de réalisation, si aucun indicateur de visibilité n'est associé à la cellule considérée, l'indicateur de visibilité disponible de la cellule la plus proche disponible peut être utilisé. Ainsi, pour le calcul de l'indice de confiance, il n'est pas indispensable de disposer de l'indicateur de visibilité de toutes les cellules de la carte.

La deuxième sous-étape consiste à calculer un résidu normalisé $\delta_{ij}^{N}$, pour chaque cellule $P_i$ et pour chaque mesure de ranging $m_j$, avec la formule suivante :

$$\delta_{ij}^{N} = \frac{m_j - d_{ij}}{\sigma_{ij}}$$

$d_{ij}$ correspond à la distance théorique entre la cellule $P_i$ et le nœud de référence $N_j$.

$m_j$ correspond à la mesure de ranging du nœud de référence $N_j$. Si la mesure de ranging est un temps d'arrivée, ou une différence de temps d'arrivée, elle peut être transformée en pseudo-distance par multiplication par la vitesse de la lumière.

Le résidu normalisé $\delta_{ij}^{N}$ rapporte donc le résidu $\delta_{ij}$ = $m_j$ - $d_{ij}$ par rapport à la précision attendue définie par $\sigma_{ij}$, qui contient l'information de LOS ou NLOS.

Selon un mode de réalisation, les résidus $\sigma_{ij}$ trop importants, et, par transposition, les résidus normalisés $\delta_{ij}^{N}$, qui ont une valeur supérieure à un seuil prédéterminé, peuvent être supprimés pour la suite du procédé. Il s'agit en effet de mesures très fortement biaisées.

Le résidu normalisé $\delta_{ij}^{N}$ est donc obtenu en supposant que le nœud mobile est localisé dans la cellule $P_i$, puis, en calculant les mesures théoriques (par exemple la distance géométrique) entre la position de la cellule et les différents nœuds de référence. Les résidus sont finalement formés en calculant un écart entre ces mesures théoriques et les mesures réelles. Ainsi, plus la position considérée sur la carte se rapproche de la position réelle, plus l'erreur résiduelle faiblit, et inversement.

L'implémentation du procédé peut prévoir de calculer d'abord l'indice de confiance $\sigma_{ij}$, puis le résidu $m_j$ - $d_{ij}$, ou bien l'inverse. Les sous-étapes c1) et c2) peuvent ainsi être exécutées simultanément.

Si les mesures de ranging sont obtenues par la technique d'aller-retour, les nœuds de référence sont synchronisés entre eux, donc la seule erreur de synchronisation à identifier est l'erreur de synchronisation entre le nœud mobile et le nœud de référence. Cette erreur de synchronisation est éliminée lors des calculs de différences de mesures, comme indiqué précédemment.

Si les mesures de ranging sont obtenues par d'autres techniques, par exemple TOA ou TDOA, utilisées dans le système LoRa, les nœuds de référence ne sont pas synchronisés entre eux. Les mesures $m_j$ sont donc des pseudo-distances, qui ont une valeur élevée (car l'instant d'émission de $m_j$ n'est pas connu). Il est donc nécessaire de tenir compte d'une valeur de défaut de synchronisation entre l'ensemble des nœuds de référence $N_j$ pour la cellule $P_i$, en supposant que le nœud mobile est localisé dans la cellule $P_i$. Ainsi, il est tenu compte du défaut de synchronisation dans le calcul du résidu normalisé :

$$\delta_{ij}^N = \frac{m_j - d_{ij} - \Delta_i}{\sigma_{ij}}$$

Pour chaque cellule $P_i$, le défaut de synchronisation, qui correspond donc à l'instant d'émission de la mesure, peut être calculé en effectuant une moyenne pondérée des résidus :

$$\Delta_i = \left( \frac{1}{\sum_{j=1}^M \sigma_{ij}^2} \right) \sum_{j=1}^M \frac{m_j - d_{ij}}{\sigma_{ij}^2}$$

où M correspond au nombre total de nœud de référence $N_j$ considérés pour la localisation du nœud mobile.

Ainsi, le procédé selon l'invention exploite avantageusement le résidu $m_j$ - $d_{ij}$ , et il est considéré que l'erreur de synchronisation est égale à la moyenne pondérée des résidus. Chaque résidu est pondéré par l'indice de confiance $\sigma_{ij}$. On obtient ainsi une vraie distance, en retranchant la valeur de défaut de synchronisation $\Delta_i$ au résidu $m_j$ - $d_{ij}$.

Selon un mode de réalisation, le défaut de synchronisation $\Delta_i$ peut être issu d'une ou de plusieurs précédentes estimation. En effet, le défaut de synchronisation $\Delta_i$ peut évoluer dans le temps, mais il peut être considéré que la dérive temporelle du défaut de synchronisation $\Delta_i$, liée à l'électronique du système, est relativement lente, et n'est pas liée au déplacement du nœud mobile. Ce mode de réalisation est notamment applicable pour effectuer de la localisation par satellites. La détermination du défaut de synchronisation $\Delta_i$ à partir des précédentes estimations peut être réalisée en utilisant par exemple une moyenne glissante, un filtre passe-bas ou encore un filtre de Kalman.

Selon un autre mode de réalisation, la carte de visibilité peut inclure une valeur de biais prédéterminée pour certaines cellules. La valeur de biais correspond à une erreur systématique, c'est-à-dire à un résidu constant observé dans le temps. La valeur de biais peut être retranchée lors de l'étape de calcul du résidu et du résidu normalisé. Cela améliore considérablement la précision de la localisation. Ce mode de réalisation est particulièrement adapté pour la localisation de nœud mobile sur un trajet connu, par exemple le long d'une ligne de chemin de fer, ou sur une ligne de production.

Dans une troisième sous-étape c3), un score de cohérence $s_i$ est calculé pour chaque cellule $P_i$. Il indique la cohérence entre la position considérée de la cellule et les mesures observées. Cet indicateur peut être calculé en utilisant la formule suivante :

$$s_i = K. exp\left(-\frac{1}{2} \sum_{j=1}^M \delta_{ij}^{N^2}\right)$$

Cette formule correspond au calcul d'une vraisemblance, avec $K$ une constante facultative de normalisation telle que, par exemple, la somme de tous les scores soit égale à 1. Le calcul d'un tel score pour chacune des positions de la carte conduit à une « cartographie » des scores, calquée sur les cartes de visibilité, et illustrée à titre d'exemple sur la figure 6.

La figure 6 illustre donc la valeur de l'indicateur $s_i$ pour chaque cellule $P_i$, sur une échelle de 0 à 100%. Les valeurs des abscisses et ordonnées correspondent, en mètres, à la distance par rapport à l'origine du graphe. La probabilité de présence du nœud mobile dans une cellule est liée à son score. En l'occurrence, le nœud mobile se situe plus vraisemblablement dans une cellule ayant un score élevé, par exemple entre 90% et 100%.

Avantageusement, le score de cohérence $s_i$ à un instant t peut être calculé en fonction du score de cohérence $s_i$ à un instant t - 1, selon la formule suivante :

$$s_i(t) = s_i(t-1) * K(t). exp\left(-\frac{1}{2} \sum_{j=1}^M \delta_{ij}^{N^2}\right)$$

Cette approche permet de transformer l'algorithme instantané en un algorithme séquentiel qui prend en compte l'historique de mesures et des solutions précédentes. La vitesse de rafraichissement des mesures s'apprécie au regard de la vitesse de déplacement du nœud mobile, notamment si celui-ci est placé sur un porteur mobile. Par exemple, si le nœud mobile est destiné à être porté par un piéton, la vitesse de rafraichissement des mesures du score sera moins élevée que si le nœud est destiné à être porté par un véhicule. Pour des objets destinés à être statiques, par exemple des capteurs domotiques, ou des capteurs extérieurs destinés à mesurer des données environnementales, une vitesse de rafraichissement journalière peut paraître suffisante.

La quatrième étape du procédé (cf. étape d), figure 3) consiste à déterminer la position du nœud mobile NM en fonction du score de cohérence $s_i$ de chaque cellule $P_i$. L'estimation de la position du nœud mobile peut s'effectuer en choisissant par exemple la position ayant le score le plus élevé ($P_i = arg\,max_i\,s_i$). Les cellules dont le score est élevé ont une probabilité élevée que le nœud mobile y soit localisé.

D'autres modes de réalisation peuvent être envisagés pour déterminer la position du nœud mobile NM.

En particulier, la carte des scores, qui délimite la même aire que les cartes de visibilité, peut être subdivisée en une pluralité de zones, qui peuvent être de surfaces égales ou non. Les zones ne sont pas définies à priori et sont formées en fonction des scores calculés selon des techniques dites de « clustering ». Un score de cohérence moyen est calculé pour chaque zone, à partir de la moyenne des scores de cohérence des cellules de la zone. Enfin, la position du nœud mobile correspond à la cellule pour laquelle le score de cohérence est maximal, dans la zone ayant le score de cohérence moyen maximal. Ce mode de réalisation permet de lever les ambiguïtés lorsque les cellules ayant des scores élevés sont très éloignées les unes des autres, ou si elles sont situées dans des zones disjointes.

Au lieu d'utiliser le score de cohérence moyen, il serait aussi possible d'utiliser le score médian.

En variante, seules les cellules dont le score est supérieur à un seuil prédéterminé, et/ou seules les zones dont le score moyen est supérieur à un seuil prédéterminé, sont prises en considération pour déterminer l'emplacement du nœud mobile.

La méthode du maximum a posteriori peut aussi être utilisée pour estimer de la position du nœud mobile à partie de la cartographie des scores.

L'invention a été décrite, jusqu'à présent, en implémentant le procédé de localisation sur tout le secteur correspondant aux cartes de visibilité, sur toutes les positions possibles de la carte. Selon un mode de réalisation, si la partie de la carte dans laquelle le nœud mobile peut a priori se trouver est connue (par exemple à partir d'une itération précédente du procédé, ou par une connaissance a priori de la zone dans laquelle se trouve le nœud mobile), la recherche peut être limitée aux cellules de la partie de la carte considérée, ce qui permet de réduire le coût de calcul.

Selon un autre mode de réalisation, le calcul n'est effectué que pour un sous-ensemble de cellules, par exemple choisies aléatoirement, ou choisies selon une résolution prédéfinie (par exemple une cellule sur dix, ou une cellule sur cent). Les résultats, c'est-à-dire les scores, obtenus à partir de ce premier sous ensemble peuvent ensuite être affinés en effectuant un deuxième calcul à partir d'un deuxième sous ensemble de cellules, choisies par exemple autour des cellules du premier sous ensemble ayant les scores les plus élevés. Ce mode de réalisation consiste donc à effectuer un premier calcul avec un échantillonnage grossier puis second calcul avec un échantillonnage plus fin autour des cellules ayant un score élevé. Ce mode de réalisation permet de réduire le nombre de scores à calculer.

L'invention est particulièrement adaptée aux mesures de temps de vol sur des distances relativement importantes (typiquement supérieures à 100 mètres), ce qui concerne les réseaux de type LPWAN (Low Power Wide Area Network, ou réseau faible consommation longue portée en français), tel que le réseau LoRaWAN, ou encore les systèmes de radionavigation par satellite (GPS, Galileo) ou les réseaux cellulaires de type 4G/5G.

L'invention se rapporte également à un système apte à mettre en œuvre le procédé prédéfini. Le système peut être par exemple un système de localisation par satellites : le nœud mobile est un récepteur de radionavigation, et les nœuds de référence sont des satellites. L'invention peut aussi être implémentée dans un système de localisation dans lequel les nœuds de référence (ancres) fonctionnent en émission, et les nœuds mobiles (tags) fonctionnent en réception. Selon une autre configuration, le nœud de référence peut être une ancre réceptrice d'un système de télémesure, et le nœud mobile peut être un terminal émetteur.

Pour une localisation cellulaire (par exemple selon les standards 4G ou 5G), les stations de base sont les nœuds de référence fonctionnant en émission, et les téléphones sont les nœuds mobiles fonctionnant en réception.

Les différentes étapes du procédé peuvent être exécutées par un dispositif de calcul intégré à l'un des nœuds de référence ou au nœud mobile, ou par un dispositif de calcul externe.

## Revendications

1. Procédé de localisation d'un nœud mobile (NM) dans une zone donnée, utilisant des nœuds de référence dont les positions sont connues dans ladite zone, comprenant au moins une itération des étapes consistant à :

   a) établir, pour chaque nœud de référence ($N_j$), une carte de visibilité ($C_j$) comprenant, pour une pluralité de cellules ($P_i$) de la carte de visibilité ($C_j$), un indicateur de visibilité ($I_{ij}$) correspondant à une propagation radio en visibilité directe entre la cellule ($P_i$) et le nœud de référence ($N_j$) ;
   b) fournir un ensemble de mesures de ranging ($m_j$) à partir de signaux émis ou reçus par une pluralité de nœuds de référence ($N_j$) ;
   c) pour chaque cellule ($P_i$) de la pluralité de cellules, calculer un score de cohérence ($s_i$) entre la position de la

cellule ($P_i$) et l'ensemble des mesures de ranging ($m_j$), le score de cohérence ($s_i$) étant calculé, pour chaque nœud de référence ($N_j$), à partir de l'indicateur de visibilité ($I_{ij}$) entre la cellule ($P_i$) et le nœud de référence ($N_j$) identifié par la mesure de ranging ($mj$) ;

d) déterminer la position du nœud mobile (NM) en fonction du score de cohérence ($s_i$) de chaque cellule ($P_i$),

**caractérisé en ce que** l'étape c) comprend :

c1) pour chaque mesure de ranging ($m_j$) et chaque cellule ($P_i$), calculer un indice de confiance ($\sigma_{ij}$) de la mesure de ranging ($m_j$) au niveau de la cellule ($P_i$) à partir de l'indicateur de visibilité ($I_{ij}$) entre la cellule ($P_i$) et le nœud de référence ($N_j$) identifié par la mesure de ranging ($mj$) ;

c2) pour chaque mesure de ranging ($m_j$), calculer un résidu normalisé ( $\delta_{ij}^{N}$ ) correspondant à une différence entre la mesure de ranging ($m_j$) et la distance ($d_{ij}$) entre la cellule ($P_i$) et le nœud de référence ($N_j$), rapportée à l'indice de confiance ($\sigma_{ij}$) ;

- c3) calculer le score de cohérence ($s_i$) entre la position de la cellule ($P_i$) et l'ensemble des mesures de ranging ($m_j$) , à partir de résidus normalisés ( $\delta_{ij}^{N}$ ) associés à chacun des nœuds de référence ($N_j$).

2. Procédé selon la revendication 1, dans lequel l'indicateur de visibilité ($I_{ij}$) a une valeur binaire indiquant une situation de propagation radio en visibilité directe ou une situation d'absence de propagation radio en visibilité directe.

3. Procédé selon la revendication 1, dans lequel l'indicateur de visibilité $I_{ij}$ entre la cellule $P_i$ et le nœud de référence $N_j$ a une valeur continue, définie par : $l_{ij} = \begin{cases} 1 - \frac{b_{int}}{b_{max}} & \text{si } b_{int} < b_{max} \\ 0 & \text{sinon} \end{cases}$ Dans laquelle $b_{int}$ correspond à une longueur d'obstruction d'un segment entre la cellule $P_i$ et le nœud de référence $N_j$, et $b_{max}$ correspond à une longueur maximale prédéfinie.

4. Procédé selon l'une des revendications 1 à 3, dans lequel l'indice de confiance $\sigma_{ij}$ est calculé selon la formule : $\sigma_{ij} = \sigma_0 + (1 - I_{ij}) \sigma_1$
Où $I_{ij}$ correspond l'indicateur de visibilité entre la cellule $P_i$ et le nœud de référence $N_j$, $\sigma_0$ et $\sigma_1$ correspondent à des valeurs prédéterminées.

5. Procédé selon l'une des revendications 1 à 3, dans lequel l'indice de confiance, pour un nœud de référence ($N_j$), est égal à une valeur constante indépendamment de l'indicateur de visibilité si l'altitude d'un nœud de référence ($N_j$) est supérieure à une altitude prédéfinie.

6. Procédé selon l'une des revendications 1 à 5, dans lequel, si un indicateur de visibilité n'est pas disponible pour une cellule ($P_i$) de la carte de visibilité ($C_j$), l'indicateur de visibilité ($I_{ij}$) disponible de la cellule la plus proche est utilisé pour calculer l'indice de confiance ( $\sigma_{ij}$ ).

7. Procédé selon l'une des revendications précédentes, dans lequel, en l'absence de synchronisation entre l'ensemble des nœuds de référence $N_j$, le résidu normalisé $\delta_{ij}^{N}$ est calculé selon la formule : $\delta_{ij}^{N} = \frac{m_j - d_{ij} - \Delta_i}{\sigma_{ij}}$ Où $m_j$ correspond à la mesure de ranging, $d_{ij}$ correspond à la distance entre la cellule $P_i$ et le nœud de référence $N_j$, $\sigma_{ij}$ correspond à l'indice de confiance associé à la mesure $m_j$ à la position de la cellule $P_i$, et $\Delta_i$ correspond à une valeur de défaut de synchronisation entre l'ensemble des nœuds de référence $N_j$ pour la cellule $P_i$.

8. Procédé selon l'une des revendications 1 à 7, dans lequel une valeur de biais est associée à au moins une cellule, la valeur de biais correspondant, pour ladite cellule, à un résidu normalisé ( $\delta_{ij}^{N}$ ) constant et supérieur à un seuil prédéterminé observé pour une pluralité d'itérations antérieures du procédé, et dans lequel la valeur de biais est retranchée de la mesure de ranging ($m_j$) lors de la sous-étape c2).

9. Procédé selon l'une des revendications 1 à 8, dans lequel le score de cohérence $s_i$ est calculé selon la formule :

$$s_i = K.exp\left(-\frac{1}{2}\sum_{j=1}^{M}\delta_{ij}^{N\,2}\right)$$ Où K est une constante de normalisation.

**10.** Procédé selon l'une des revendications précédentes, dans lequel le score de cohérence $s_i$ à un instant t est en outre calculé en fonction du score de cohérence $s_i$ à un instant t - 1.

**11.** Procédé selon l'une des revendications précédentes, dans lequel

- la carte de visibilité ($C_j$) est subdivisée en une pluralité de zones ;
- un score de cohérence moyen est calculé pour chaque zone, à partir de la moyenne des scores de cohérence des cellules de la zone ;
- la position du nœud mobile (NM) correspond à la cellule ($P_i$) pour laquelle le score de cohérence ($s_i$) est maximal, dans la zone ayant le score de cohérence moyen maximal.

**12.** Système de localisation d'un nœud mobile (NM) dans une zone donnée, utilisant des nœuds de référence dont les positions sont connues dans ladite zone, le système étant configuré pour :

a) établir, pour chaque nœud de référence ($N_j$), une carte de visibilité ($C_j$) comprenant, pour une pluralité de cellules ($P_i$) de la carte de visibilité ($C_j$), un indicateur de visibilité ($I_{ij}$) correspondant à une propagation radio en visibilité directe entre la cellule ($P_i$) et le nœud de référence ($N_j$) ;
b) fournir un ensemble de mesures de ranging ($m_j$) à partir de signaux émis ou reçus par une pluralité de nœuds de référence ($N_j$) ;
c) pour chaque cellule ($P_i$) de la pluralité de cellules, calculer un score de cohérence ($s_i$) entre la position de la cellule ($P_i$) et l'ensemble des mesures de ranging ($m_j$), le score de cohérence ($s_i$) étant calculé, pour chaque nœud de référence ($N_j$), à partir de l'indicateur de visibilité ($I_{ij}$) entre la cellule ($P_i$) et le nœud de référence ($N_j$) identifié par la mesure de ranging ($m_j$) ;
d) déterminer la position du nœud mobile (NM) en fonction du score de cohérence ($s_i$) de chaque cellule ($P_i$) ;

**caractérisé en ce que** le système est en outre configuré pour :

c1) pour chaque mesure de ranging ($m_j$) et chaque cellule ($P_i$), calculer un indice de confiance ($\sigma_{ij}$) de la mesure de ranging ($m_j$) au niveau de la cellule ($P_i$) à partir de l'indicateur de visibilité ($I_{ij}$) entre la cellule ($P_i$) et le nœud de référence ($N_j$) identifié par la mesure de ranging ($m_j$) ;

c2) pour chaque mesure de ranging ($m_j$), calculer un résidu normalisé ($\delta_{ij}^{N}$) correspondant à une différence entre la mesure de ranging ($m_j$) et la distance ($d_{ij}$) entre la cellule ($P_i$) et le nœud de référence ($N_j$), rapportée à l'indice de confiance ($\sigma_{ij}$) ;

- c3) calculer le score de cohérence ($s_i$) entre la position de la cellule ($P_i$) et l'ensemble des mesures de ranging ($m_j$) , à partir de résidus normalisés ($\delta_{ij}^{N}$) associés à chacun des nœuds de référence ($N_j$).

**13.** Système selon la revendication 12, dans lequel le nœud mobile (NM) est un tag émetteur, et les nœuds de référence ($N_j$) sont des ancres.

**14.** Système selon la revendication 12, dans lequel le nœud mobile (NM) est un récepteur de radionavigation, et les nœuds de référence ($N_j$) sont des satellites.

**Patentansprüche**

**1.** Verfahren zur Lokalisierung eines mobilen Knotens (NM) in einem bestimmten Gebiet unter Verwendung von Referenzknoten, deren Positionen in diesem Gebiet bekannt sind, umfassend mindestens eine Iteration der folgenden Schritte:

a) Erstellen, für jeden Referenzknoten ($N_j$), einer Sichtbarkeitskarte ($C_j$), die für eine Vielzahl von Zellen ($P_i$) der Sichtbarkeitskarte ($C_j$) einen Sichtbarkeitsindikator ($I_{ij}$) umfasst, der einer Funkausbreitung bei direkter Sichtlinie zwischen der Zelle ($P_i$) und dem Referenzknoten ($N_j$) entspricht;

b) Bereitstellen einer Reihe von Entfernungsmessungen ($m_j$) auf der Grundlage von Signalen, die von einer Vielzahl von Referenzknoten ($N_j$) ausgesendet oder empfangen werden;

c) für jede Zelle ($P_i$) der Vielzahl von Zellen, Berechnen eines Kohärenzwerts ($s_i$) zwischen der Position der Zelle ($P_i$) und der Reihe von Entfernungsmessungen ($m_j$), wobei der Kohärenzwert ($s_i$) für jeden Referenzknoten ($N_j$) auf der Grundlage des Sichtbarkeitsindikators ($l_{ij}$) zwischen der Zelle ($P_i$) und dem Referenzknoten ($N_j$) berechnet wird, der durch die Entfernungsmessung ($m_j$) identifiziert wurde;

d) Bestimmen der Position des mobilen Knotens (NM) in Abhängigkeit von dem Kohärenzwert ($s_i$) jeder Zelle ($P_i$),

**dadurch gekennzeichnet, dass** Schritt d) Folgendes umfasst:

c1) für jede Entfernungsmessung ($m_j$) und jede Zelle ($P_i$), Berechnen eines Konfidenzindex ($\sigma_{ij}$) der Entfernungsmessung ($m_j$) auf Ebene der Zelle ($P_i$) auf der Grundlage des Sichtbarkeitsindikators ($l_{ij}$) zwischen der Zelle ($P_i$) und dem Referenzknoten ($N_j$), der durch die Entfernungsmessung ($m_j$) identifiziert wurde;

c2) für jede Entfernungsmessung ($m_j$), Berechnen eines normierten Restes ( $\delta_{ij}^N$ ), der einer Differenz zwischen der Entfernungsmessung ($m_j$) und dem Abstand ($d_{ij}$) zwischen der Zelle ($P_i$) und dem Referenzknoten ($N_j$) entspricht, bezogen auf den Konfidenzindex ($\sigma_{ij}$);

- c3) Berechnen des Kohärenzwerts ($s_i$) zwischen der Position der Zelle ($P_i$) und der Reihe von Entfernungsmessungen ($m_j$) auf der Grundlage der normierten Reste ( $\delta_{ij}^N$ ), die jedem der Referenzknoten ($N_j$) zugeordnet sind.

2. Verfahren nach Anspruch 1, wobei der Sichtbarkeitsindikator ($l_{ij}$) einen binären Wert aufweist, der entweder eine Situation mit einer Funkausbreitung bei direkter Sichtlinie oder eine Situation ohne Funkausbreitung bei direkter Sichtlinie angibt.

3. Verfahren nach Anspruch 1, wobei der Sichtbarkeitsindikator $l_{ij}$ zwischen der Zelle $P_i$ und dem Referenzknoten $N_j$ einen kontinuierlichen Wert aufweist, der definiert ist durch: $l_{ij} = \begin{cases} 1 \cdot - \frac{b_{int}}{b_{max}} & \text{wenn } b_{int} < b_{max} \\ 0 & \text{andernfalls} \end{cases}$ wobei $b_{int}$ einer Hinderníslänge eines Segments zwischen der Zelle $P_i$ und dem Referenzknoten $N_j$ entspricht und $b_{max}$ einer vordefinierten maximalen Länge entspricht.

4. Verfahren nach einem der Ansprüche 1 bis 3, wobei der Konfidenzindex $\sigma_{ij}$ nach der folgenden Formel berechnet wird:
$\sigma_{ij} = \sigma_0 + (1-l_{ij})\, \sigma_1$
wobei $l_{ij}$ dem Sichtbarkeitsindex zwischen der Zelle $P_i$ und dem Referenzknoten $N_j$ entspricht, während $\sigma_0$ und $\sigma_1$ vorbestimmten Werten entsprechen.

5. Verfahren nach einem der Ansprüche 1 bis 3, wobei der Konfidenzindex für einen Referenzknoten ($N_j$) unabhängig vom Sichtbarkeitsindikator einem konstanten Wert entspricht, wenn die Höhe eines Referenzknotens ($N_j$) größer als eine vordefinierte Höhe ist.

6. Verfahren nach einem der Ansprüche 1 bis 5, wobei, falls ein Sicherheitsindikator für eine Zelle ($P_i$) der Sichtbarkeitskarte ($C_j$) nicht verfügbar ist, der verfügbare Sichtbarkeitsindikator ($l_{ij}$) der nächstgelegenen Zelle verwendet wird, um den Konfidenzindex ($\sigma_{ij}$) zu berechnen.

7. Verfahren nach einem der vorstehenden Ansprüche, wobei bei fehlender Synchronisation zwischen der Reihe der Referenzknoten $N_j$ der normierte Rest $\delta_{ij}^N$ nach der folgenden Formel berechnet wird: $\delta_{ij}^N = \frac{m_j - d_{ij} - \Delta_i}{\sigma_{ij}}$ wobei $m_j$ der Entfernungsmessung entspricht, $d_{ij}$ dem Abstand zwischen der Zelle $P_i$ und dem Referenzknoten $N_j$ entspricht, $\sigma_{ij}$ dem der Messung $m_j$ an der Position der Zelle $P_i$ zugeordneten Konfidenzindex entspricht, und $\Delta_i$ einem Synchronisationsfehlerwert zwischen der Reihe von Referenzknoten $N_j$ für die Zelle $P_i$ entspricht.

8. Verfahren nach einem der Ansprüche 1 bis 7, wobei ein Bias-Wert mindestens einer Zelle zugeordnet wird, wobei der Bias-Wert für die Zelle einem normierten Rest ( $\delta_{ij}^N$ ) entspricht, der konstant und größer als ein vorbestimmter Schwellenwert ist, der bei einer Vielzahl früherer Iterationen des Verfahrens beobachtet wurde, und wobei der Bias-Wert in Unterschritt c2) von der Entfernungsmessung ($m_j$) subtrahiert wird.

9. Verfahren nach einem der Ansprüche 1 bis 8, wobei der Kohärenzwert $s_i$ nach der folgenden Formel berechnet wird:

$$s_i = K \exp\left(-\frac{1}{2}\sum_{j=1}^{M} \delta_{ij}^{N^2}\right)$$ wobei K eine Normierungskonstante ist.

10. Verfahren nach einem der vorstehenden Ansprüche, wobei der Kohärenzwert $s_i$ zu einem Zeitpunkt t zusätzlich in Abhängigkeit von dem Kohärenzwert $s_i$ zu einem Zeitpunkt $t-1$ berechnet wird.

11. Verfahren nach einem der vorstehenden Ansprüche, wobei

- die Sichtbarkeitskarte ($C_j$) in eine Vielzahl von Gebieten unterteilt wird;
- für jedes Gebiet ein durchschnittlicher Kohärenzwert berechnet wird, der sich aus dem Durchschnitt der Kohärenzwerte der Zellen in diesem Gebiet ergibt;
- die Position des mobilen Knotens (NM) der Zelle ($P_i$) entspricht, für die der Kohärenzwert ($s_i$) am höchsten ist, und zwar in dem Gebiet mit dem höchsten durchschnittlichen Kohärenzwert.

12. System zur Lokalisierung eines mobilen Knotens (NM) in einem bestimmten Gebiet unter Verwendung von Referenzknoten, deren Positionen in diesem Gebiet bekannt sind, wobei das System konfiguriert ist zum:

a) Erstellen, für jeden Referenzknoten ($N_j$), einer Sichtbarkeitskarte ($C_j$), die für eine Vielzahl von Zellen ($P_i$) der Sichtbarkeitskarte ($C_j$) einen Sichtbarkeitsindikator ($I_{ij}$) umfasst, der einer Funkausbreitung bei direkter Sichtlinie zwischen der Zelle ($P_i$) und dem Referenzknoten ($N_j$) entspricht;
b) Bereitstellen einer Reihe von Entfernungsmessungen ($m_j$) auf der Grundlage von Signalen, die von einer Vielzahl von Referenzknoten ($N_j$) ausgesendet oder empfangen werden;
c) für jede Zelle ($P_i$) der Vielzahl von Zellen, Berechnen eines Kohärenzwerts ($s_i$) zwischen der Position der Zelle ($P_i$) und der Reihe von Entfernungsmessungen ($m_j$), wobei der Kohärenzwert ($s_i$) für jeden Referenzknoten ($N_j$) auf der Grundlage des Sichtbarkeitsindikators ($I_{ij}$) zwischen der Zelle ($P_i$) und dem Referenzknoten ($N_j$) berechnet wird, der durch die Entfernungsmessung ($m_j$) identifiziert wurde;
d) Bestimmen der Position des mobilen Knotens (NM) in Abhängigkeit von dem Kohärenzwert ($s_i$) jeder Zelle ($P_i$);

**dadurch gekennzeichnet, dass** das System außerdem konfiguriert ist zum:

c1) für jede Entfernungsmessung ($m_j$) und jede Zelle ($P_i$), Berechnen eines Konfidenzindex ($\sigma_{ij}$) der Entfernungsmessung ($m_j$) auf Ebene der Zelle ($P_i$) auf der Grundlage des Sichtbarkeitsindikators ($I_{ij}$) zwischen der Zelle ($P_i$) und dem Referenzknoten ($N_j$), der durch die Entfernungsmessung ($m_j$) identifiziert wurde;

c2) für jede Entfernungsmessung ($m_j$), Berechnen eines normierten Restes ($\delta_{ij}^{N}$) der einer Differenz zwischen der Entfernungsmessung ($m_j$) und dem Abstand ($d_{ij}$) zwischen der Zelle ($P_i$) und dem Referenzknoten ($N_j$) entspricht, bezogen auf den Konfidenzindex ($\sigma_{ij}$);

- c3) Berechnen des Kohärenzwerts ($s_i$) zwischen der Position der Zelle ($P_i$) und der Reihe von Entfernungsmessungen ($m_j$) auf der Grundlage der normierten Reste ($\delta_{ij}^{N}$) die jedem der Referenzknoten ($N_j$) zugeordnet sind.

13. System nach Anspruch 12, wobei der mobile Knoten (NM) ein Sender-Tag ist und die Referenzknoten ($N_j$) Anker sind.

14. System nach Anspruch 12, wobei der mobile Knoten (NM) ein Funknavigationsempfänger ist und die Referenzknoten ($N_j$) Satelliten sind.

## Claims

1. Method for locating a mobile node (NM) in a given area, using reference nodes, the positions of which are known in said area, comprising at least one iteration of the steps of:

a) creating, for each reference node ($N_j$), a visibility map ($C_j$) comprising, for a plurality of cells ($P_i$) of the visibility map ($C_j$), a visibility indicator ($l_{ij}$) corresponding to a line-of-sight radio propagation between the cell ($P_i$) and the reference node ($N_j$);

b) providing a set of ranging measurements ($m_j$) based on signals transmitted or received by a plurality of reference nodes ($N_j$);

c) computing, for each cell ($P_i$) of the plurality of cells, a coherence score ($s_i$) between the position of the cell ($P_i$) and the set of ranging measurements ($m_j$), the coherence score ($s_i$) being computed, for each reference node ($N_j$), on the basis of the visibility indicator ($l_{ij}$) between the cell ($P_i$) and the reference node ($N_j$) identified by the ranging measurement ($m_j$);

d) determining the position of the mobile node (NM) as a function of the coherence score ($s_i$) of each cell ($P_i$),

**characterized in that** step c) comprises:

c1) computing, for each ranging measurement ($m_j$) and each cell ($P_i$), a confidence index ($\sigma_{ij}$) of the ranging measurement ($m_j$) at the cell ($P_i$) on the basis of the visibility indicator ($l_{ij}$) between the cell ($P_i$) and the reference node ($N_j$) identified by the ranging measurement ($m_j$);

c2) computing, for each ranging measurement ($m_j$), a normalized residual ($\delta_{ij}^N$) corresponding to a difference between the ranging measurement ($m_j$) and the distance ($d_{ij}$) between the cell ($P_i$) and the reference node ($N_j$), related to the confidence index ($\sigma_{ij}$);

c3) computing the coherence score ($s_i$) between the position of the cell ($P_i$) and the set of ranging measurements ($m_j$), on the basis of the normalized residuals ($\delta_{ij}^N$) associated with each of the reference nodes ($N_j$).

2. Method according to claim 1, wherein the visibility indicator ($l_{ij}$) has a binary value indicating a situation involving a line-of-sight radio propagation or a situation not involving a line-of-sight radio propagation.

3. Method according to claim 1, wherein the visibility indicator $l_{ij}$ between the cell $P_i$ and the reference node $N_j$ has a continuous value, defined by:

$$l_{ij} = \begin{cases} 1 - \dfrac{b_{int}}{b_{max}} & \text{if } b_{int} < b_{max} \\ 0 & \text{otherwise} \end{cases}$$

wherein $b_{int}$ corresponds to an obstruction length of a segment between the cell $P_i$ and the reference node $N_j$, and $b_{max}$ corresponds to a predefined maximum length.

4. Method according to any one of claims 1 to 3, wherein the confidence index $\sigma_{ij}$ is computed according to the formula: $\sigma_{ij} = \sigma_0 + (1-l_{ij})\,\sigma_1$, wherein $l_{ij}$ corresponds to the visibility indicator between the cell $P_i$ and the reference node $N_j$, and $\sigma_0$ and $\sigma_1$ correspond to predetermined values.

5. Method according to any one of claims 1 to 3, wherein the confidence index, for a reference node ($N_j$), is equal to a constant value independently of the visibility indicator if the altitude of a reference node ($N_j$) is higher than a predefined altitude.

6. Method according to any one of claims 1 to 5, wherein, if a visibility indicator is not available for a cell ($P_i$) of the visibility map ($C_j$), the available visibility indicator ($l_{ij}$) of the nearest cell is used to compute the confidence index ($\sigma_{ij}$).

7. Method according to any one of the preceding claims, wherein, in the absence of synchronization between all the reference nodes $N_j$, the normalized residual $\delta_{ij}^N$ is computed according to the formula: $\delta_{ij}^N = \dfrac{m_j - d_{ij} - \Delta_i}{\sigma_{ij}}$ where $m_j$ corresponds to the ranging measurement, $d_{ij}$ corresponds to the distance between the cell $P_i$ and the reference node $N_j$, $\sigma_{ij}$ corresponds to the confidence index associated with the measurement $m_j$ at the position of the cell $P_i$, and $\Delta_i$ corresponds to a synchronization error value between all the reference nodes $N_j$ for the cell $P_i$.

8. Method according to any one of claims 1 to 7, wherein a bias value is associated with at least one cell, the bias value corresponding, for said cell, to a normalized residual ( $\delta_{ij}^{N}$ ) that is constant and greater than a predetermined threshold observed for a plurality of previous iterations of the method, and wherein the bias value is subtracted from the ranging measurement ($m_j$) during the sub-step c2).

9.  Method according to any one of claims 1 to 8, wherein the coherence score $s_i$ is computed according to the formula:

$$s_i = K\, exp\left(-\frac{1}{2}\sum\nolimits_{j\,=\,1}^{M}\delta_{ij}^{N2}\right)$$ where K is a normalization constant.

10. Method according to any of the preceding claims, wherein the coherence score $s_i$ at a time $t$ is also computed as a function of the coherence score $s_i$ at a time $t - 1$.

11. Method according to any of the preceding claims, wherein

    - the visibility map ($C_j$) is subdivided into a plurality of areas;
    - an average coherence score is computed for each area, based on the average of the coherence scores of the cells in the area;
    - the position of the mobile node (NM) corresponds to the cell ($P_i$) for which the coherence score ($s_i$) is maximum, in the area with the maximum average coherence score.

12. System for locating a mobile node (NM) in a given area, using reference nodes, the positions of which are known in said area, the system being configured for:

    a) creating, for each reference node ($N_j$), a visibility map ($C_j$) comprising, for a plurality of cells ($P_i$) of the visibility map ($C_j$), a visibility indicator ($I_{ij}$) corresponding to a line-of-sight radio propagation between the cell ($P_i$) and the reference node ($N_j$);
    b) providing a set of ranging measurements ($m_j$) based on signals transmitted or received by a plurality of reference nodes ($N_j$);
    c) computing, for each cell ($P_i$) of the plurality of cells, a coherence score ($s_i$) between the position of the cell ($P_i$) and the set of ranging measurements ($m_j$), the coherence score ($s_i$) being computed, for each reference node ($N_j$), on the basis of the visibility indicator ($I_{ij}$) between the cell ($P_i$) and the reference node ($N_j$) identified by the ranging measurement ($m_j$);
    d) determining the position of the mobile node (NM) as a function of the coherence score ($s_i$) of each cell ($P_i$);

    characterized in that the system is further configured to:

    c1) computing, for each ranging measurement ($m_j$) and each cell ($P_i$), a confidence index ($\sigma_{ij}$) of the ranging measurement ($m_j$) at the cell ($P_i$) on the basis of the visibility indicator ($I_{ij}$) between the cell ($P_i$) and the reference node ($N_j$) identified by the ranging measurement ($m_j$);

    c2) computing, for each ranging measurement ($m_j$), a normalized residual ( $\delta_{ij}^{N}$ ) corresponding to a difference between the ranging measurement ($m_j$) and the distance ($d_{ij}$) between the cell ($P_i$) and the reference node ($N_j$), related to the confidence index ($\sigma_{ij}$);
    c3) computing the coherence score ($s_i$) between the position of the cell ($P_i$) and the set of ranging measurements

    ($m_j$), on the basis of the normalized residuals $\delta_{ij}^{N}$ ) associated with each of the reference nodes ($N_j$).

13. System according to claim 12, wherein the mobile node (NM) is a transmitter tag, and the reference nodes ($N_j$) are anchors.

14. System according to claim 12, wherein the mobile node (NM) is a radionavigation receiver, and the reference nodes ($N_j$) are satellites.

FIG.1

FIG.2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2022051615 A1
- WO 2009035952 A1

- US 2022050211 A1, Bennington

**Littérature non-brevet citée dans la description**

- **H. JIANG** ; **J. XU** ; **Z. LI**. NLOS Mitigation Method for TDOA Measurement. *2010 Sixth International Conference on Intelligent Information Hiding and Multimedia Signal Processing*, 2010, 196-199

- **M. N. DE SOUSA** ; **R. S. THOMÄ**. Mobile Station Localization Emitter in Urban NLoS using Multipath Ray Tracing Fingerprints and Machine Learning. *2018 8th International Conference on Localization and GNSS (ICL-GNSS)*, 2018, 1-6
- **HSU**. *3D building model-based pedestrian positioning method using GPS/GLONASS/QZSS and is reliability calculation*